# EUROPEAN PATENT APPLICATION

(11) **EP 4 670 694 A2**
(43) Date of publication of application: **31.12.2025**
(21) Application number: 25215930.6
(22) Date of filing: 21.10.2022
(51) Int. Cl.: A61G 7/05

(54) **BRAKE MECHANISM AND WHEELED CARRYING APPARATUS**

(30) Priority: 21.10.2021 CN 202111230214
(62) Divisional of application: 22808748.2
(71) Applicant: Wonderland Switzerland AG, 6312 Steinhausen (CH)
(72) Inventor: ZHU, Wanquan, Dongguan, Guangdong, 523648 (CN)
(74) Representative: Lucke, Andreas

(57) **Abstract**

The present disclosure provides a brake mechanism and a wheeled carrying apparatus. The brake mechanism includes a driving member and a brake assembly including a driving pin, a linking member, an actuating member, a thrusting member and a locking member. The driving pin is connected to one end of the linking member, the other end of the linking member is connected to the actuating member, the actuating member is movably provided within a wheel mount of the wheeled carrying apparatus. The thrusting member is movably provided within the actuating member, the actuating member is connected to the locking member, the driving member drives the driving pin of the brake assembly to move, so that the actuating member is driven by the linking member to be movable, and then drives the locking member to be movable so as to lock or unlock the wheel.

## Description

### TECHNICAL FIELD

The present disclosure relates to a wheeled carrying apparatus, and in particular to a brake mechanism and a wheeled carrying apparatus having such a mechanism.

### BACKGROUND

An existing wheeled carrying apparatus generally has a brake mechanism which may be used to lock wheels of the wheeled carrying apparatus by pedaling when the wheeled carrying apparatus is stopped, thereby preventing the wheeled carrying apparatus from moving, avoiding accidents and improving safety. There are generally two types of brake mechanisms in the existing wheeled carrying apparatuses, i.e., one is to lock a single wheel, in which two brake mechanisms must be provided to brake two rear wheels respectively; and the other is to lock both wheels simultaneously. In addition, the front wheels of the existing wheeled carrying apparatuses are universal wheels and the rear wheels cannot be rotated universally, which makes it difficult to operate and is inflexible in certain operations (for example, when moving laterally). Moreover, some of the wheeled carrying apparatuses, whose front and rear wheels all are universal wheel, lack orientation mechanisms for the rear wheels, so that the rear wheels are easy to be rotated in the normal forward travel, which will affect the driving of the wheeled carrying apparatus. CN 111391910 A, CN 109466613 A, and CN 110171460 A describe conventional wheel brake devices. US 2011/0285110 Al describes a stroller with four pivotably mounted wheels.

### SUMMARY

The invention relates to a brake mechanism according to independent claim 1 and a wheeled carrying apparatus according to independent claim 13. The dependent claims relate to optional embodiments. The present disclosure provides a brake mechanism suitable for locking wheels of a wheeled carrying apparatus, including a driving member and a brake assembly. The brake assembly includes a driving pin, a linking member, an actuating member, a thrusting member and a locking member. The driving pin is connected to one end of the linking member, the other end of the linking member is connected to the actuating member, the actuating member is movably provided within a wheel mount of the wheeled carrying apparatus. The thrusting member is movably provided within the actuating member, the thrusting member is connected to the locking member, the driving member drives the driving pin of the brake assembly to move, so that the actuating member is driven by the linking member to move, and then drives the locking member to move, so as to lock or unlock the wheels.

The present disclosure further provides a wheeled carrying apparatus including a frame and a pair of universally rotatable front wheels is provided, as well as a pair of rear wheels and a brake mechanism, the brake mechanism is provided on the frame and enable to simultaneously lock the pair of rear wheels for prohibiting the rear wheels from rolling.

### BRIEF DESCRIPTION OF THE DRAWINGS

FIG. 1 is a front perspective view of a wheeled carrying apparatus of the present disclosure.
FIG. 2 is a rear perspective view of the wheeled carrying apparatus of the present disclosure.
FIG. 3 is a perspective view of a rear wheel and a brake mechanism of the wheeled carrying apparatus of the present disclosure.
FIG. 4 shows the rear wheel and an internal structure of the brake mechanism of the wheeled carrying apparatus of the present disclosure.
FIG. 5 is a cross-sectional view of the rear wheel and the internal structure of the brake mechanism of the wheeled carrying apparatus of the present disclosure.
FIG. 6 is a side cross-sectional view of the rear wheel, the brake mechanism and an orientation mechanism of the wheeled carrying apparatus of the present disclosure.
FIG. 7 is an internal structural view of a rear leg tube of the wheeled carrying apparatus of the present disclosure.
FIG. 8 is a structural view of an actuating member, a thrusting member and a locking member of the wheeled carrying apparatus of the present disclosure.
FIG. 9 is a structural view of the rear wheel and the brake mechanism of the wheeled carrying apparatus of the present disclosure with the driving member removed.
FIG. 10 is a structural view of an upper part of the driving member of the brake mechanism of the wheeled carrying apparatus of the present disclosure.
FIG. 11 is a view showing a state of the locking assembly of the wheeled carrying apparatus of the present disclosure after a pedal is pressed.
FIG. 12 is a view showing a state of the locking assembly of the wheeled carrying apparatus of the present disclosure after the pedal is lifted.
FIG. 13 is a view showing a state of the brake mechanism of the wheeled carrying apparatus of the present disclosure when the rear wheel is unlocked.
FIG. 14 is a view showing a state of the brake mechanism of the wheeled carrying apparatus of the present disclosure when the rear wheel is locked.
FIG. 15 is a perspective view of the brake mechanism of the wheeled carrying apparatus of the present disclosure when the rear wheel is unlocked.
FIG. 16 is a structural view of a bearing within a wheel mount of the wheeled carrying apparatus of the present disclosure.
FIG. 17 is a side cross-sectional view of the orientation mechanism of the wheeled carrying apparatus of the present disclosure when the rear wheel is locked.
FIG. 18 is an internal structural view of an operating part of the orientation mechanism of the wheeled carrying apparatus of the present disclosure.

### List of reference numbers in the drawings:

Wheeled Carrying Apparatus 100
Frame 1
Wheel Base 11
Transverse Tube 12
Elongated Hole 12a
Front Wheel 2
Rear Wheel 3
Wheel Mount 31
Clamping Hole 32
Pivoting Sleeve 31a
Bearing 33
Toothed Structure 311
Brake Mechanism 4
Driving Member 41
Driving Pin 42
Locking Member 43
Elastic Member 44
Thrusting Member 45
Elastic Restoring Member 46
Rear Leg Tube 47
First Linking Member 48
Second Linking Member 49
Locking Assembly 410
Pedal 411
Actuating Member 412
Inclined Slot 412a
Receiving Boss 412b
Restoring Part 413
First Sleeve 414
Second Sleeve 415
Driving Inclined Slot 41a
Driving Shaft 42a
Moving Pin 45a
Receiving Part 48a
Pivot Joint 49a
Pivot Joint 49b
Locking Recess 410a
Locking Pin 410b
Compression Spring 410c
Guiding Groove 410d
Orientation Mechanism 5
Operating Part 51
Third Linking Member 52
Wheel Mount Latch 53
Restoring Spring 54
Inclined Sliding Slot 51a
Moving Head 52a

### DETAILED DESCRIPTION

In order to illustrate the technical contents, structural features and achieved effects of the present disclosure in detail, the following detailed description will be made in conjunction with the embodiments and the accompanying drawings.

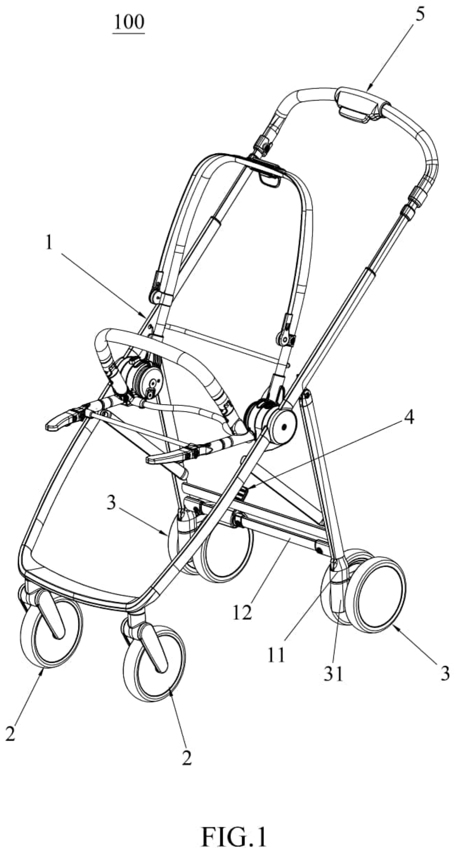

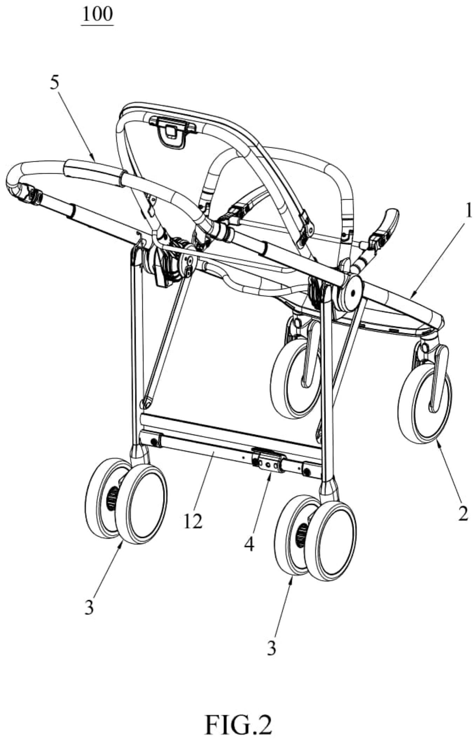

As shown in FIGS. 1 and 2, a wheeled carrying apparatus 100 of the present disclosure includes a frame 1, a pair of universally rotatable front wheels 2, a pair of rear wheels 3, a brake mechanism 4 and an orientation mechanism 5. Each of the rear wheels 3 is pivotally connected to a wheel mount 31 in a rolling manner, the wheel mounts 31 are provided on the frame 1 in a universal rotation manner, and a rolling axis of the rear wheel 3 is perpendicular to a central axis of rotation of the wheel mount 31. A brake mechanism 4 is provided on the frame 1 and may lock both rear wheels 3 simultaneously to prohibit the rear wheels 3 from rolling, or unlock the rear wheels 3 simultaneously to allow the rear wheels 3 to roll. The orientation mechanism 5 is provided on the frame 1 and may limit both rear wheels 3 simultaneously to prohibit the universal rotation of each of the rear wheels 3 about the central axis of rotation of the wheel mount 31, or release the rear wheels simultaneously to allow the universal rotation of each of the rear wheels 3 about the central axis of rotation of the wheel mount 31.

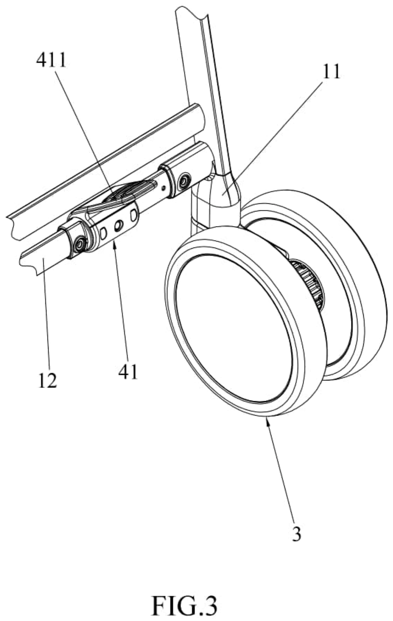

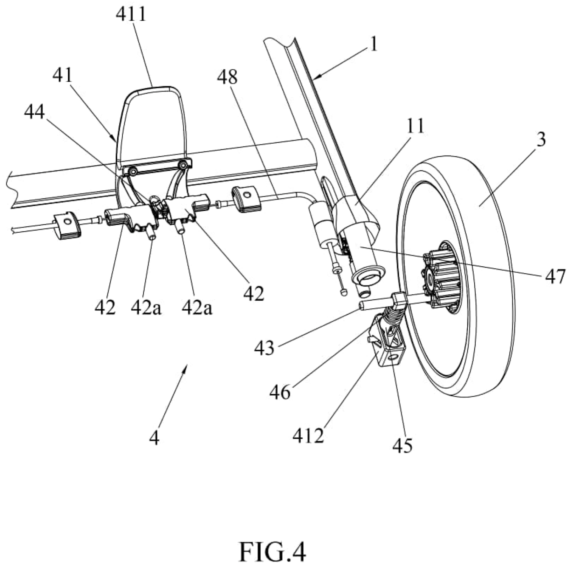

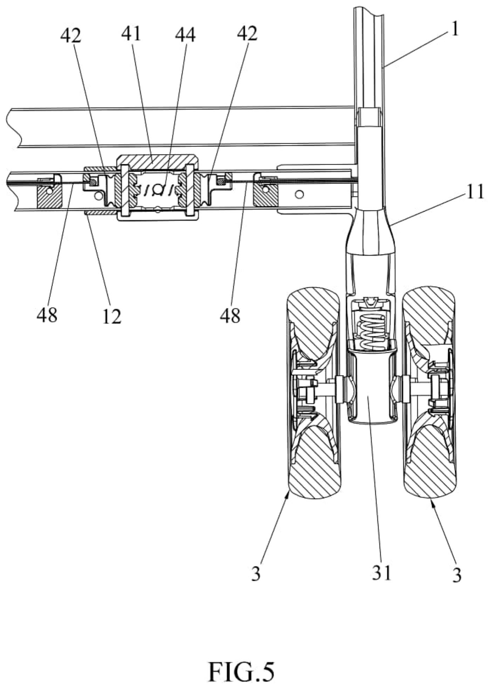

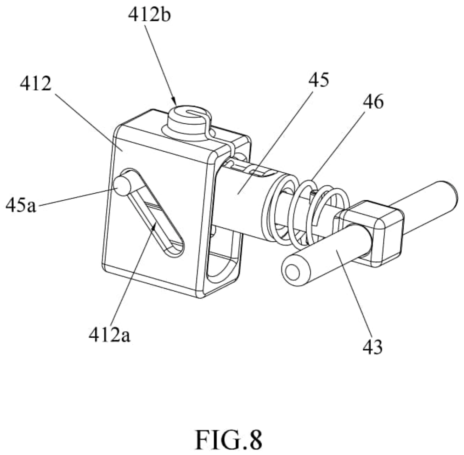

Specifically, in combination with FIGS. 1-2, and referring to FIGS. 3-8, the brake mechanism 4 includes a driving member 41 and a brake assembly. There are two brake assemblies in this embodiment since two rear wheels 3 are provided. The two brake assemblies are provided symmetrically and both driven by one driving member 41, and each of the brake assemblies controls one rear wheel 3. Each of the brake assemblies includes a driving pin 42, a linking member (e.g., a pulling/traction member), a locking member 43, an elastic member 44, a thrusting member 45, an elastic restoring member 46, and an actuating member 412. The brake mechanism 4 may lock or unlock both rear wheels 3 simultaneously. Specifically, a wheel base 11 is provided on each of both sides at a rear end of the frame 1, a transverse tube 12 is provided between two wheel mounts 11, and the driving member 41 is in a form of a sleeve and is rotatably sleeved onto the transverse tube 12 about a central axis of the transverse tube 12. The driving member 41 has a pedal 411 extending out therefrom for stepping on. The driving pin 42 is axially movably disposed in the transverse tube 12 along the central axis of the transverse tube 12. The driving member 41 may drive both driving pins 42 simultaneously. The elastic member 44 is provided between the two driving pins 42, which may provide an elastic force to restore the driving pins 42 so that the driving pins 42 may perform repeated actions. The two brake assemblies are provided symmetrically and their structures for locking or unlocking the two rear wheels 3 on either side are same, and therefore, only the brake assembly on one side is described below. The driving pin 42 is connected to one end of the linking member, the one end of the linking member is located within the transverse tube 12, and the other end of the linking member is connected to the actuating member 412, and the actuating member 412 is movably provided in the wheel mount 31 of the wheeled carrying apparatus. The thrusting member 45 is movably provided on the actuating member 412, a moving direction of the actuating member 412 in the wheel mount 31 is perpendicular to a moving direction of the thrusting member 45. The thrusting member 45 is connected to the locking member 43, and the driving member 41 may drive the driving pins 42 of both brake assemblies simultaneously to move, so that the actuating member 412 is driven by the linking member to move, and then the actuating member 412 drives the locking member 43 to move, so as to lock or unlock the rear wheel 3 on the same side. The actuating member 412 is provided with an inclined slot 412a, and the thrusting member 45 is provided with a moving pin 45a which is movably inserted in the inclined slot 412a to bring the thrusting member 45 close to or away from the rear wheel 3. The locking member 43 is movably connected to the thrusting member 45. A restoring part 413 is provided between the locking member 43 and the thrusting member 45. Specifically, the locking member 43 is in a T-shaped structure, wherein a vertical shaft of the locking member 43 is movably sleeved to the thrusting member 45, a transverse shaft of the locking member 43 extends out of the thrusting member 45. One end of the restoring part 413 abuts against an end of the vertical shaft, and the other end thereof abuts against an inner bottom of the thrusting member 45. The restoring part 413 is a compression spring. More specifically, the thrusting member 45 has a receiving space inside, the receiving space penetrates through one end of the thrusting member 45, and the restoring part 413 is built into the receiving space of the thrusting member 45. When the locking member 43, together with the thrusting member 45, moves close to the axis of the rear wheel 3, the locking member 43 retracts into the thrusting member 45 and the restoring part 413 is squeezed; on the contrary, when the locking member 43, together with the thrusting member 45, moves away from the axis of the rear wheel 3, the restoring part 413 will extend and drive the locking member 43 to extend out under its own elastic force. The elastic restoring member 46 provides an elastic force for restoring the locking member 43, so that the locking member 43 may be automatically disengaged from the rear wheel 3. The elastic restoring member 46 is arranged in the wheel mount 31, and has one end abutting against the thrusting member 45 and the other end abutting against an inner wall surface of the wheel mount 31. The elastic restoring member 46 is a compression spring. When the thrusting member 45 is driven by a driving force to move close to the axis of the rear wheel 3, the elastic restoring member 46 is squeezed; on the contrary, when the driving force applied on the thrusting member 45 is removed, the elastic restoring member 46 moves the thrusting member 45 and the locking member 43 away from the rear wheel 3 under its own elastic force.

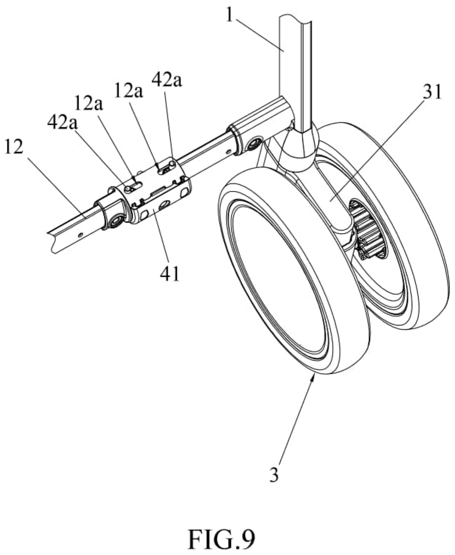

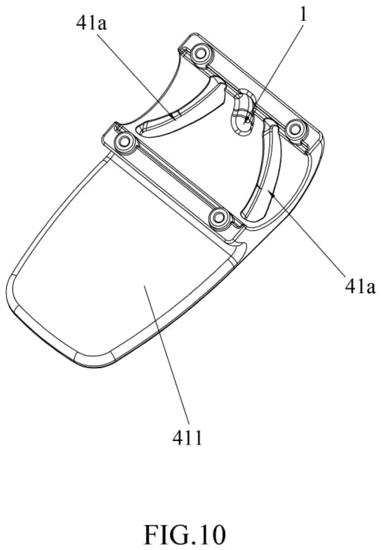

Referring again to FIGS. 9-10, more specifically, a pair of driving inclined slots 41a are symmetrically provided on a wall surface of the driving member 41, a distance between ends of the two driving inclined slots 41a at one side is less than a distance between ends thereof at the other side. The driving pin 42 is provided with a driving shaft 42a, and a central axis direction of the driving shaft 42a is perpendicular to a moving direction of the driving pin 42. The transverse tube 12 is provided with an elongated hole 12a extending in a central axis direction of the transverse tube 12, and the driving shaft 42a is movably inserted in the elongated hole 12a and also in the driving inclined slot 41a, so that the driving pin 42 is moved by the driving inclined slot 41a when the driving member 41 is rotated. By providing the driving inclined slots 41a, the driving inclined slots 41a may convert a torque for rotation of the driving member 41 into an axial tension on the driving pin 42, so that the linking member is driven by the driving pin 42, and then drives the locking member 43 (for example, by pulling) to achieve the purpose of driving the locking member 43.

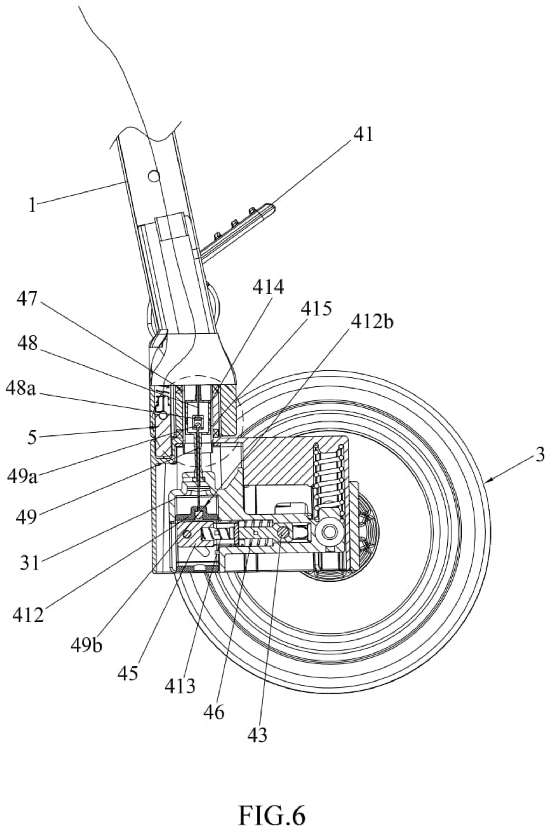

As further shown in FIGS. 6-7, the brake mechanism 4 further includes a rear leg tube 47 fixedly provided on the wheel base 11 of the frame 1, a lower end of the rear leg tube 47 extends downwards from the wheel base 11, and the wheel mount 31 of the rear wheel is rotatably sleeved to the rear leg tube 47. The linking member includes a first linking member 48 and a second linking member 49, both of which are steel wires. One end of the first linking member 48 is connected to the driving pin 42, the other end of the first linking member 48 extends into the rear leg tube 47 and is rotatably connected to one end of the second linking member 49, and the other end of the second linking member 49 is connected to the actuating member 412. More specifically, the first linking member 48 is located at one end of the rear leg tube 47, one end of the first linking member 48 is provided with a connecting head 48b which is integrally connected to the first linking member 48, and one end of the second linking member 49 is provided with a pivot joint 49a, which is integrally connected to the second linking member 49. The pivot joint 49a is a spherical head. Each of the first linking member 48 and the second linking member 49 is provided with a receiving part 48a with a hollow structure. Each of the upper and lower ends of the receiving part 48a is provided with an opening which penetrates from inside to outside. The connecting head 48b passes through the opening on the upper end of the receiving part 48a and is clamped in the receiving part 48a, and the pivot joint 49a passes through the opening on the lower end of the receiving part 48a and is rotatably clamped in the receiving part 48a, so that the first linking member 48 is connected to the second linking member 49. The receiving part 48a is suspended in the rear leg tube 47. Specifically, the pivot joint 49a is rotatably provided in the receiving part 48a and a spherical surface of the pivot joint 49a is in a point contact with a bottom surface of the receiving part 48a, for reducing the contact frictional area and enabling the pivot joint 49a to rotate more smoothly. A traction wire of the second linking member 49 is led outwards through the opening on the lower end of the receiving part 48a. With the cooperation of the receiving part 48a and the pivot joint 49a, as the pivot joint 49a is freely rotatable within the receiving part 48a, the first linking member 48 is connected to the second linking member 49 in such a way that the first linking member 48 is prevented from being twisted due to rotation of the wheel mount 31 of the rear wheel, thus avoiding affecting the action of the driving pin 42 and the driving member 41. The brake mechanism 4 also includes a first sleeve 414 fixed within the rear leg tube 47 and a second sleeve 415 built into the rear leg tube 47 and rotatably connected to the first sleeve 414. The first sleeve 414 and the second sleeve 415 enclose an internal space through which the first linking member 48 and the second linking member 49 passes, and the receiving part 48a is located within the internal space. By providing the first sleeve 414 and the second sleeve 415 and making the second sleeve 415 rotatable with respect to the first sleeve 414, it is possible to protect the receiving part 48a and solve the problem of interference during rotation of the wheel mount 31, further reducing the probability of the second linking member 49 twisting due to the rotation of the wheel mount 31, and improving the stability when the wheel rotates universally. When the wheel mount 31 rotates, the receiving part 48a, the connecting head 48b and the first sleeve 414 do not rotate, while the pivot joint 49a and the second sleeve 415 rotate with the wheel mount 31.

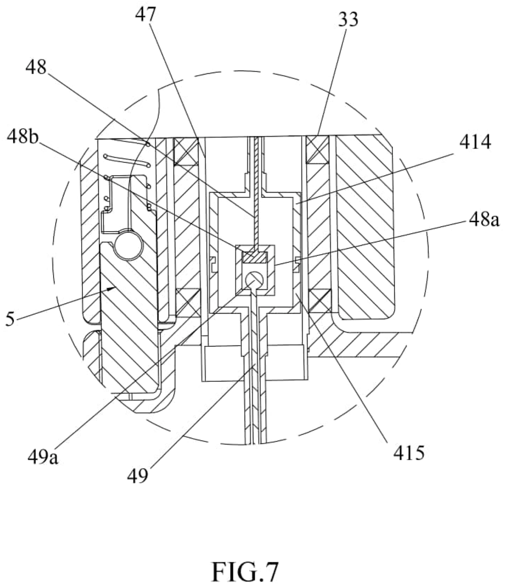

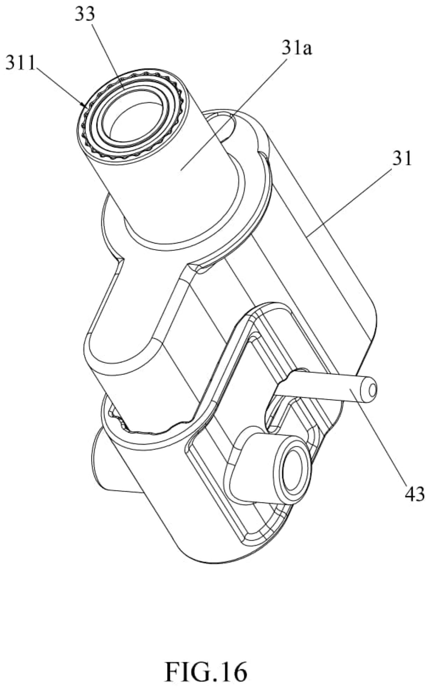

As shown in FIGS. 7 and 16, a bearing is provided between the frame 1 and the wheel mount 31. Specifically, the bearing 33 is provided between the rear leg tube 47 and the wheel mount 31. By providing the bearing 33, the rotation between the rear leg tube 47 and the wheel mount 31 may be more stable and smooth, ensuring that the wheel mount 31 may be rotated universally. Specifically, the wheel mount 31 has a pivoting sleeve 31a pivotally connected with the rear leg tube 47, the bearing 33 is provided in the pivoting sleeve 31a, and a wall surface of the pivoting sleeve 31a in contact with an outer wall of the bearing 33 has a toothed structure 311 in a circumferential direction. By adding the toothed structure 311, the deformation of the pivoting sleeve 31a may be increased, so as to prevent the pivoting sleeve 31a from being broken and prolong the service life.

Alternatively, referring again to FIG. 6, more specifically, the actuating member 412 is provided with a receiving boss 412b protruding outwards, and the other end of the second linking member 49 is provided with a pivot joint 49b which is a spherical head. The pivot joint 49b is pivotably provided within the receiving boss 412b and is in a spherical contact with the receiving boss 412b, so as to connect the actuating member 412 to the second linking member 49. One end of the elastic restoring member 46 abuts against an end of the thrusting member 45 and the other end thereof abuts against the inside of the wheel mount 31. By the cooperation of the receiving boss 412b and the pivot joint 49b, as the pivot joint 49b is freely rotatable within the receiving boss 412b, the second linking member 49 is connected to the actuating member 412 in such a way that the second linking member 49 is prevented from being twisted due to the rotation of the wheel.

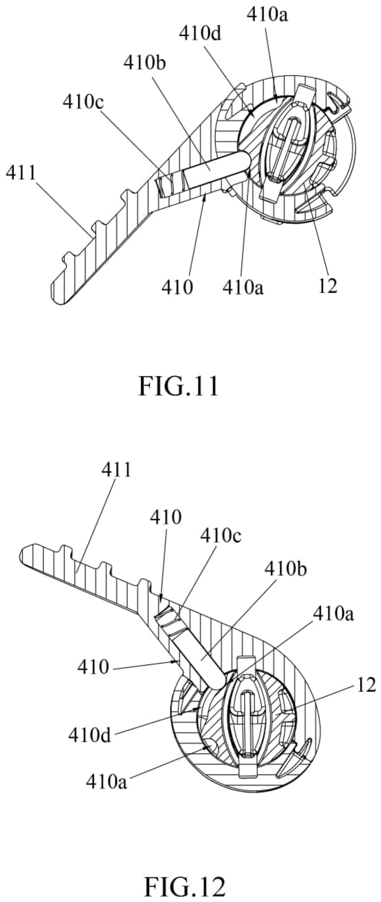

As further shown in FIGS. 11 and 12, a locking assembly 410 is provided between the driving member 41 and the frame 1 for locking or unlocking the driving member 41. Specifically, the locking assembly 410 includes a locking pin 410b movably provided on the driving member 41, two locking recesses 410a provided on a crossbar of the frame and a compression spring 410c. The compression spring 410c is provided between the locking pin 410b and the driving member 41 to drive the locking pin 410b to extend out. When the driving member 41 is rotated to a position of locking the rear wheel, the locking pin 410b cooperates with one of the locking recesses 410a to position the driving member 41; and when the driving member 41 is rotated to a position of unlocking the wheel, the locking pin 410b cooperates with the other of the locking recesses 410a to position the driving member 41. By providing the cooperation between the locking pin 410b with the locking recess 410a, the wheel may be kept being locked by the driving member 41 without the user keeps applying a force to the driving member 41, improving the convenience of use; and when the driving member is unlocked, the stability of the driving member may also be ensured, preventing the driving member from accidental rotation and causing the wheel to be locked accidentally. A guiding groove 410d is provided on a side of the driving member 41 and arranged between the two locking recesses 410a. When the driving member 41 is rotated and the rear wheel is unlocked, the locking pin 410b may slide along the guiding groove 410d towards the other of the locking recesses 410a; and when the driving member 41 is rotated and the rear wheel is locked, the locking pin 410b slides along the guiding groove 410d towards the one of the locking recesses 410a, thereby guiding the driving member 41 as the driving member 41 is rotated.

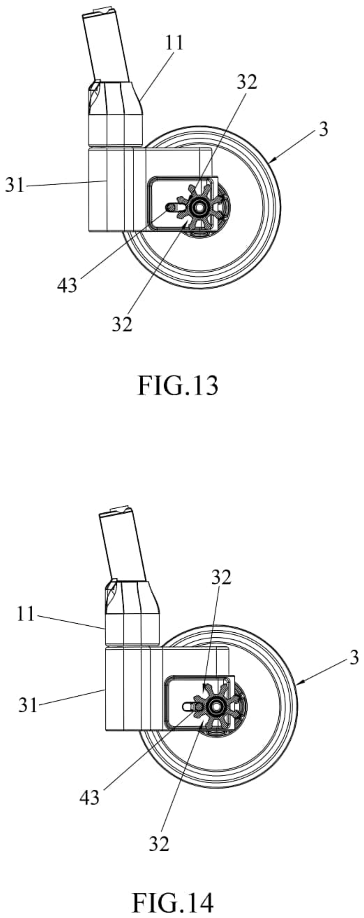

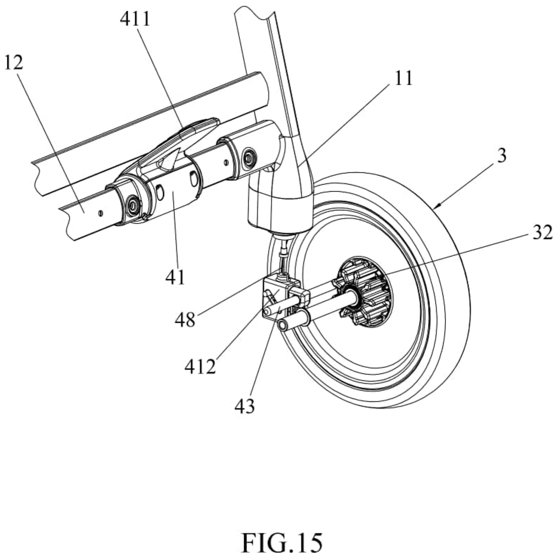

Further referring to FIGS. 13-15, a hub of the rear wheel 3 is provided with clamping holes 32 distributed circumferentially about a rolling axis of the rear wheel 3, the clamping hole 32 has an opening facing outwards, and a transverse axis of the locking member 43 may move into the clamping hole 32 to lock the rear wheel 3 or move out of the clamping hole 32 to unlock the rear wheel 3.

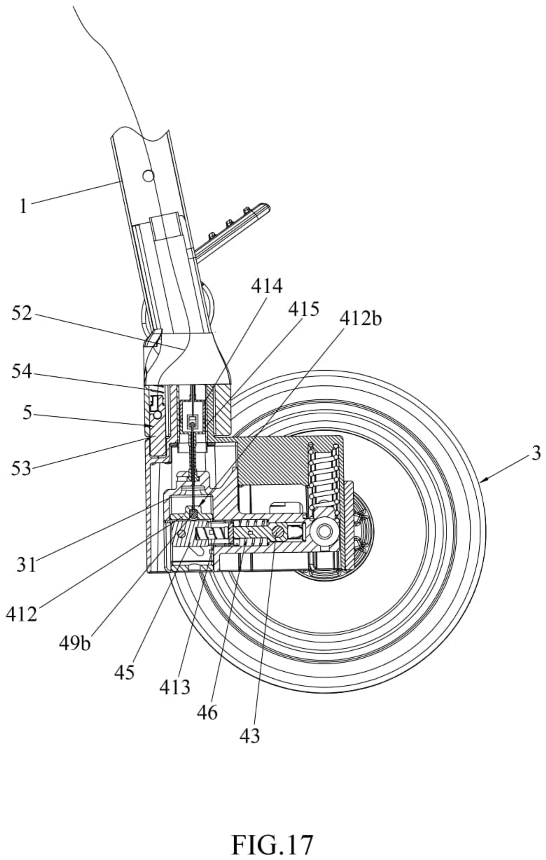

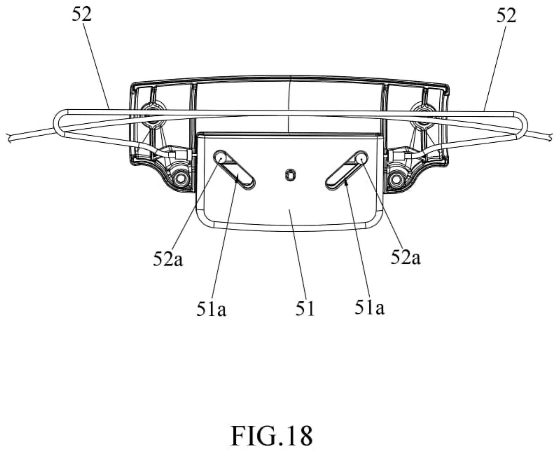

Further referring to FIGS. 17 and 18, the orientation mechanism 5 includes an operating part 51, a third linking member 52, a wheel mount latch 53 and a restoring spring 54. The third linking member 52 is a steel wire. The operating part 51 is provided on an armrest of the wheeled carrying apparatus 100 and is connected to one end of the third linking member 52. The wheel mount latch 53 is located near the rear wheel 3 and is movably provided on the frame 1. The other end of the third linking member 52 extends close to the rear wheel 3 and is connected to the wheel mount latch 53. The restoring spring 54 provides an elastic force to restore the wheel mount latch 53, and the restoring spring 54 is arranged between the wheel mount latch 53 and the wheel mount 11. The wheel mount latch 53 may be inserted into a positioning hole of the wheel mount 31 and position the rear wheel 3 (i.e., the rear wheel 3 is in a locked state), or may be disengaged with the wheel mount 31 and release the rear wheel 3 (i.e., the rear wheel 3 is in a release state, at this time, four wheels can be rotated universally to achieve the "drifting" function). The operating part 51 is movably arranged on a push handle of the frame 1 of the wheeled carrying apparatus 100, and is symmetrically provided with two inclined sliding slots 51a. The two inclined sliding slots 51a are provided symmetrically to each other, and a distance between ends of the two inclined sliding slots at one side is less than a distance between ends thereof at the other side. A moving head 52a is provided on an end of the third linking member 52. The moving head 52a is movably arranged on the frame 1 and has a moving direction perpendicular to the moving direction of the operating part 51, and the moving head 52a of each of the two third linking members 52 is movably inserted in the inclined sliding slot 51a. Thus, when the user presses the operating part 51, the two moving heads 52a may be driven close to each other or away from each other by the inclined sliding slots 51a, so that two third linking members 52 connected to respective moving heads 52a are subjected to an actuating force (e.g., a pulling force) in order to drive the wheel mount latches 53.

In one embodiment, two operating parts are provided to drive the linking members on both sides to move the actuating member 412 respectively, so that the actuating member 412 drives the locking member 43 to move to lock or unlock the corresponding rear wheel

As described above, and in combination with the above figures, when it is necessary to brake the wheeled carrying apparatus, the pedal is pressed down to rotate the driving member 41 on the transverse tube 12, and the driving inclined slot 41a of the driving member 41 drives the driving shaft 42a to move from one end of the driving sliding slot 41a to the other end thereof, causing the driving pin 42 to move. Thus, the driving pin 42 then drives the first linking member 48, the first linking member 48 drives the second linking member 49, the second linking member 49 drives the actuating member 412 to move, the actuating member 412 drives the thrusting member 45 through the inclined slot 412a and the moving pin 45a, the thrusting member 45 drives the locking member 43, the locking member 43 may then be engaged with the clamping hole 32 of the rear wheel 3, clamp and lock the rear wheel 3. At this time, the rear wheel 3 cannot roll, and the wheeled carrying apparatus 100 is in a brake state and cannot be driven. When it is necessary to unlock, the pedal needs to be lifted to drive the driving member 41, and the driving member 41 may be restored under the action of the elastic member 44, so as to release the first linking member 48 and the second linking member 49, and the actuating member 412 and the thrusting member 45 are restored under the action of the elastic restoring member 46. Thus, the locking member 43 is disengaged from the clamping hole 32, and then unlocks the rear wheel 3, so that the wheeled carrying apparatus 100 may be driven.

When it is necessary to set the wheeled carrying apparatus 100 in a drifting state, on the premise that the rear wheel 3 is kept being unlocked by the brake mechanism 4, the operating part 51 is operated to drive the third linking member 52 to move, and the third linking member 52 drives the wheel mount latch 53 to be disengaged from the positioning hole of the wheel mount 31, so that the rear wheel 3 may rotate about the rear leg tube 47. During the rotation, the wheel mount 31 drives the second sleeve 415 to rotate with respect to the first sleeve 414, while the pivot joint 49a of the second linking member 49 may be rotated within the receiving part 48a. In this way, both the front wheels 2 and the rear wheels 3 of the wheeled carrying apparatus 100 may be rotated and the wheeled carrying apparatus 100 may perform drifting actions such as a lateral movement. When the operating part 51 is released, the wheel mount latch 53 is engaged with (for example, inserted into) the positioning hole of the wheel mount 31 under the action of restoring elasticity, thus locking the rear wheel 3 again. At this time, the rear wheel 3 of the wheeled carrying apparatus 100 may only roll without rotating, and the wheeled carrying apparatus 100 is in a non-drifting state.

A driving member 41 is adapted to drive the two driving pins 42 to move, so as to drive the linking members by the two driving pins 42 respectively, and the characteristic of flexible extension of the linking member enables the two linking members to extend to the rear wheels 3 and drive the actuating members 412, and then the actuating members 412 are applied to drive the thrusting members 45 and the locking members 43 provided near the rear wheels 3 so that the two locking members 43 may respectively lock the rear wheels at the same side. In this way, the user only needs to step down one driving member 41 to lock the rear wheels 3 simultaneously, thus realizing a double braking function with one pedal and having a simple structure and a convenient operation. In addition, the wheel mount 31 is universally rotatable with respect to the frame 1, so that the wheeled carrying apparatus 100 may be moved laterally and thus has the ability to drift; also, the orientation mechanism 5 may be applied to lock or unlock the wheel mount 31, so that it may be switched between a drifting function and a non-drifting function at any time, greatly increasing the convenience and flexibility of use.

In one embodiment, the number of the brake assemblies is two, and the driving pins of the two brake assemblies are simultaneously driven by the driving member.

In one embodiment, the actuating member is provided with an inclined slot, and the thrusting member is provided with a moving pin movably inserted in the inclined slot to bring the thrusting member close to or away from an axis of the wheel.

Specifically, the locking member is partially sleeved within the thrusting member, and when the moving pin moves in the inclined slot, the locking member moves close to or away from the axis of the wheel along with the thrusting member.

Specifically, the locking member is movably connected to the thrusting member, and a restoring part is provided between the locking member and the thrusting member.

In one embodiment, the driving member is symmetrically provided with a pair of driving inclined slots, and a driving shaft is provided outside of the driving pin and perpendicular to its own central axis, and the driving shaft is movably inserted in and connected with the driving inclined slot to move the driving pin by the driving inclined slot when the driving member rotates.

In one embodiment, an elastic member is also included. The elastic member is provided between the two driving pins.

In one embodiment, the linking member includes a first linking member and a second linking member, one end of the first linking member is connected to the driving pin, the other end of the first linking member is rotatably connected to one end of the second linking member, and the other end of the second linking member is connected to the actuating member.

Specifically, the first linking member is provided with a connecting head, the second linking member has a pivot joint, a receiving part is provided between the first linking member and the second linking member, the connecting head is provided within the receiving part, and the pivot joint is rotatably provided within the receiving part to connect the first linking member to the second linking member.

Specifically, the actuating member is provided with a receiving boss, the second linking member has a pivot joint, and the pivot joint is provided within the receiving boss to connect the actuating member and the second linking member.

Specifically, the pivot joint is a spherical head.

In one embodiment, the brake mechanism further includes a rear leg tube provided on a frame of the wheeled carrying apparatus, the wheel is sleeved onto the rear leg tube, and the receiving part is provided within the rear leg tube.

Specifically, the brake mechanism further includes a first sleeve and a second sleeve, the first sleeve is fixed within the rear leg tube, the second sleeve is built into the rear leg tube and rotatably connected to the first sleeve; the first sleeve and the second sleeve enclose an internal space through which the first linking member and the second linking member pass, the receiving part is located within the internal space.

In one embodiment, the brake mechanism further includes an elastic restoring member providing an elastic force to restore the thrusting member.

In one embodiment, a hub of the wheel is provided with clamping holes distributed about a rolling axis of the wheel, the clamping hole has an opening facing outwards, and the locking member is capable of moving into the clamping hole to lock the wheel or moving out of the clamping hole to unlock the wheel.

In one embodiment, the driving member is in a form of a sleeve and is rotatably sleeved onto a crossbar of a frame of the wheeled carrying apparatus, and the driving member has a pedal extending out therefrom for stepping on.

A locking assembly is provided between the driving member and the frame to lock or unlock the driving member.

Specifically, the locking assembly includes a locking pin provided on the driving member and two locking recesses provided on the frame, the locking pin cooperates with one of the locking recesses to position the driving member when the driving member is rotated to a position of locking the wheel; and the locking pin cooperates with the other of the locking recesses to position the driving member when the driving member is rotated to a position of unlocking the wheel.

Specifically, the locking pin is movably provided on the driving member, the locking assembly further includes a compression spring provided between the locking pin and the driving member to drive the locking pin to extend out.

Specifically, the driving member is further provided with a guiding groove at a side thereof, the guiding groove is provided between the two locking recesses, the locking pin slides along the guiding groove towards the other of the locking recess when the driving member is rotated and the wheel is unlocked, and the locking pin slides along the guiding groove towards the one of the locking recesses when the driving member is rotated and the wheel is locked.

In one embodiment, the wheeled carrying apparatus further includes an orientation mechanism, the rear wheel is pivotally connected to the wheel mount, the wheel mount is provided on the frame in a universal rotation manner, the orientation mechanism limits two wheel mounts simultaneously to prohibit the real wheels from universally rotating, or releases the two wheel mounts simultaneously to allow the wheel mounts to universally rotate.

Specifically, the orientation mechanism includes an operating part, a third linking member, a wheel mount latch and a restoring spring, the operating part is connected to one end of the third linking member, the other end of the third linking member is connected to the wheel mount latch, the restoring spring provides an elastic force for restoring the wheel mount latch, the wheel mount latch is insertable into the wheel mount and positions the rear wheel, or is disengaged from the wheel mount and releases the rear wheel.

Specifically, the operating part is movably arranged on the frame of the wheeled carrying apparatus and symmetrically provided with two inclined sliding slots, a moving head is provided on an end of the third linking member, and the moving head is movably provided on the frame and movably inserted in the inclined sliding slot.

In one embodiment, two operating parts are provided to drive the linking members on both sides to move the actuating member respectively, so that the actuating member drives the locking member to move to lock or unlock the corresponding rear wheel.

Specifically, a bearing is provided between the frame and the wheel mount.

Specifically, the frame has a rear leg tube, the wheel mount has a pivoting sleeve pivotally connected with the rear leg tube, and the bearing is provided between the pivoting sleeve and the rear leg tube.

Specifically, a wall surface of the pivoting sleeve in contact with an outer wall of the bearing has a toothed structure in a circumferential direction.
Aspects of the present disclosure relate to the following:
Aspect 1: A brake mechanism for locking wheels of a wheeled carrying apparatus, comprising a driving member and a brake assembly, wherein the brake assembly comprises a driving pin, a linking member, an actuating member, a thrusting member and a locking member, the driving pin is connected to one end of the linking member, the other end of the linking member is connected to the actuating member, the actuating member is movably provided within a wheel mount of the wheeled carrying apparatus;
   wherein the thrusting member is movably provided within the actuating member, the thrusting member is connected to the locking member, the driving member drives the driving pin of the brake assembly to move, so that the actuating member is driven by the linking member to move, and then drives the locking member to move, so as to lock or unlock the wheels.
Aspect 2: The brake mechanism according to Aspect 1, wherein the number of the brake assemblies is two, and the driving pins of the two brake assemblies are simultaneously driven by the driving member.
Aspect 3: The brake mechanism according to Aspect 1 or 2, wherein the actuating member is provided with an inclined slot, and the thrusting member is provided with a moving pin movably inserted in the inclined slot to bring the thrusting member close to or away from an axis of the wheel.
Aspect 4: The brake mechanism according to Aspect 3, wherein the locking member is partially sleeved within the thrusting member, and when the moving pin moves in the inclined slot, the locking member moves close to or away from the axis of the wheel along with the thrusting member.
Aspect 5: The brake mechanism according to any of the preceding Aspects, wherein the locking member is movably connected to the thrusting member, and a restoring part is provided between the locking member and the thrusting member.
Aspect 6: The brake mechanism according to any of the preceding Aspects, wherein the driving member is symmetrically provided with a pair of driving inclined slots, and a driving shaft is provided outside the driving pin and perpendicular to its own central axis, and the driving shaft is movably inserted in the driving inclined slot to move the driving pin by the driving inclined slot when the driving member rotates.
Aspect 7: The brake mechanism according to any of the preceding Aspects, further comprising an elastic member provided between two driving pins.
Aspect 8: The brake mechanism according to any of the preceding Aspects, wherein the linking member comprises a first linking member and a second linking member, wherein one end of the first linking member is connected to the driving pin, the other end of the first linking member is rotatably connected to one end of the second linking member, and the other end of the second linking member is connected to the actuating member.
Aspect 9: The brake mechanism according to Aspect 8, wherein the first linking member is provided with a connecting head, the second linking member has a pivot joint, a receiving part is provided between the first linking member and the second linking member, the connecting head is provided within the receiving part, and the pivot joint is rotatably provided within the receiving part to connect the first linking member to the second linking member.
Aspect 10: The brake mechanism according to Aspect 8 or 9, wherein the actuating member is provided with a receiving boss, the second linking member has a pivot joint, and the pivot joint is provided within the receiving boss to connect the actuating member and the second linking member.
Aspect 11: The brake mechanism according to Aspect 9 or 10, wherein the pivot joint is a spherical head.
Aspect 12: The brake mechanism according to Aspect 9, optionally in combination with Aspect 10 or 11, wherein the brake mechanism further comprises a rear leg tube provided on a frame of the wheeled carrying apparatus, wherein the wheel mount is rotatably sleeved onto the rear leg tube, and the receiving part is provided within the rear leg tube.
Aspect 13: The brake mechanism according to Aspect 12, wherein the brake mechanism further comprises a first sleeve and a second sleeve, the first sleeve is fixed within the rear leg tube, the second sleeve is built into the rear leg tube and rotatably connected to the first sleeve;
   wherein the first sleeve and the second sleeve enclose an internal space through which the first linking member and the second linking member pass, and the receiving part is located within the internal space.
Aspect 14: The brake mechanism according to any of the preceding Aspects, wherein the brake mechanism further comprises an elastic restoring member providing an elastic force to restore the thrusting member.
Aspect 15: The brake mechanism according to any of the preceding Aspects, wherein a hub of the wheel is provided with clamping holes distributed about a rolling axis of the wheel, the clamping hole has an opening facing outwards, and the locking member is capable of moving into the clamping hole to lock the wheel or moving out of the clamping hole to unlock the wheel.
Aspect 16: The brake mechanism according to any of the preceding Aspects, wherein the driving member is in a form of a sleeve and is rotatably sleeved onto a crossbar of a frame of the wheeled carrying apparatus, and the driving member has a pedal extending out therefrom for stepping on.
Aspect 17: The brake mechanism according to Aspect 16, wherein a locking assembly is provided between the driving member and the frame to lock or unlock the driving member.
Aspect 18: The brake mechanism according to Aspect 17, wherein the locking assembly comprises a locking pin provided on the driving member, and two locking recesses provided on the frame, wherein the locking pin cooperates with one of the locking recesses to position the driving member when the driving member is rotated to a position of locking the wheel; and the locking pin cooperates with the other of the locking recesses to position the driving member when the driving member is rotated to a position of unlocking the wheel.
Aspect 19: The brake mechanism according to Aspect 18, wherein the locking pin is movably provided on the driving member, wherein the locking assembly further comprises a compression spring provided between the locking pin and the driving member to drive the locking pin to extend out.
Aspect 20: The brake mechanism according to Aspect 18 or 19, wherein the driving member is further provided with a guiding groove at a side thereof, wherein the guiding groove is provided between the two locking recesses, the locking pin slides along the guiding groove towards the other of the locking recess when the driving member is rotated and the wheel is unlocked, and the locking pin slides along the guiding groove towards the one of the locking recesses when the driving member is rotated and the wheel is locked.
Aspect 21: A wheeled carrying apparatus comprising a frame and a pair of universally rotatable front wheels, wherein the wheeled carrying apparatus further comprises a pair of rear wheels and the brake mechanism according to any one of Aspects 1 to 20, and the brake mechanism is provided on the frame and enable to simultaneously lock the pair of rear wheels for prohibiting the rear wheels from rolling.
Aspect 22: The wheeled carrying apparatus according to Aspect 21, wherein the wheeled carrying apparatus further comprises an orientation mechanism, the rear wheel is pivotally connected to the wheel mount, the wheel mount is provided on the frame in a universal rotation manner, the orientation mechanism limits two wheel mounts simultaneously to prohibit the wheel mounts from universally rotating, or releases the two wheel mounts simultaneously to allow the wheel mounts to universally rotate.
Aspect 23: The wheeled carrying apparatus according to Aspect 22, wherein the orientation mechanism comprises an operating part, a third linking member, a wheel mount latch and a restoring spring, the operating part is connected to one end of the third linking member, the other end of the third linking member is connected to the wheel mount latch, the restoring spring provides an elastic force for restoring the wheel mount latch, the wheel mount latch is insertable into the wheel mount and positions the rear wheel, or is disengaged from the wheel mount and releases the rear wheel.
Aspect 24: The wheeled carrying apparatus according to Aspect 23, wherein the operating part is movably provided on the frame of the wheeled carrying apparatus and symmetrically provided with two inclined sliding slots, a moving head is provided on an end of the third linking member, and the moving head is movably provided on the frame and movably inserted in the inclined sliding slot.
Aspect 25: The wheeled carrying apparatus according to any of the Aspects 21 to 24, wherein a bearing is provided between the frame and the wheel mount.
Aspect 26: The wheeled carrying apparatus according to Aspect 25, wherein the frame has a rear leg tube, the wheel mount has a pivoting sleeve pivotally connected with the rear leg tube, and the bearing is provided between the pivoting sleeve and the rear leg tube.
Aspect 27: The wheeled carrying apparatus according to Aspect 26, wherein a wall surface of the pivoting sleeve that is in contact with an outer wall of the bearing has a toothed structure in a circumferential direction.

## Claims

1. A brake mechanism (4) for locking wheels of a wheeled carrying apparatus (100), comprising a driving member (41) and a brake assembly, wherein the brake assembly comprises a driving pin (42), a linking member, an actuating member (412), a thrusting member (45) and a locking member (43), the driving pin (42) is connected to one end of the linking member, the other end of the linking member is connected to the actuating member (412), the actuating member (412) is movably provided within a wheel mount (31) of the wheeled carrying apparatus (100);
wherein the thrusting member (45) is movably provided within the actuating member (412), and the locking member (43) is movably connected to the thrusting member (45), wherein the driving member (41) drives the driving pin (42) of the brake assembly to move, so that the actuating member (412) is driven by the linking member to move and drives the thrusting member (45) to move, and then the thrusting member (45) drives the locking member (43) to move, so as to lock or unlock the wheels.

2. The brake mechanism (4) according to claim 1, wherein the number of the brake assemblies is two, and the driving pins (42) of the two brake assemblies are simultaneously driven by the driving member (41).

3. The brake mechanism (4) according to claim 1 or 2, a moving direction of the actuating member (412) in the wheel mount (31) is perpendicular to a moving direction of the thrusting member (45);
wherein, optionally, the actuating member (412) is provided with an inclined slot (412a), and the thrusting member (45) is provided with a moving pin (45a) movably inserted in the inclined slot (412a) to bring the thrusting member (45) close to or away from an axis of the wheel;
wherein, further optionally, the locking member (43) is partially sleeved within the thrusting member (45), and when the actuating member (412) drives the thrusting member (45) to move, the locking member (43) moves close to or away from the axis of the wheel along with the thrusting member (45).

4. The brake mechanism (4) according to any of the preceding claims, wherein a restoring part (413) is provided between the locking member (43) and the thrusting member (45); and/or
wherein the driving member (41) is symmetrically provided with a pair of driving inclined slots (41a), and a driving shaft (42a) is provided outside the driving pin (42) and perpendicular to its own central axis, and the driving shaft (42a) is movably inserted in the driving inclined slot (41a) to move the driving pin (42) by the driving inclined slot (41a) when the driving member (41) rotates; and/or
wherein the brake mechanism (4) further comprises an elastic member (44) provided between two driving pins (42) and configured to provide an elastic force to restore the two driving pins (42).

5. The brake mechanism (4) according to claim 4,
wherein the locking member (43) is in a T-shaped structure and has a vertical shaft and a transverse shaft, wherein the vertical shaft is movably sleeved to the thrusting member (45), the transverse shaft extends out of the thrusting member (45), one end of the restoring part (413) abuts against an end of the vertical shaft, and the other end thereof abuts against an inner bottom of the thrusting member (45); and/or
wherein, when the locking member (43), together with the thrusting member (45), moves close to an axis of the wheel, the locking member (43) retracts into the thrusting member (45) and the restoring part (413) is squeezed; and when the locking member (43), together with the thrusting member (45), moves away from the axis of the wheel, the restoring part (413) extends and drives the locking member (43) to extend out under its own elastic force.

6. The brake mechanism (4) according to any of the preceding claims, wherein the linking member comprises a first linking member (48) and a second linking member (49), wherein one end of the first linking member (48) is connected to the driving pin (42), the other end of the first linking member (48) is rotatably connected to one end of the second linking member (49), and the other end of the second linking member (49) is connected to the actuating member (412).

7. The brake mechanism (4) according to claim 6, wherein the first linking member (48) is provided with a connecting head (48b), the second linking member (49) has a pivot joint (49a), a receiving part (48a) is provided between the first linking member (48) and the second linking member (49), the connecting head (48b) is provided within the receiving part (48a), and the pivot joint (49a) is rotatably provided within the receiving part (48a) to connect the first linking member (48) to the second linking member (49).

8. The brake mechanism (4) according to claim 6 or 7, wherein the actuating member (412) is provided with a receiving boss (412b), the second linking member (49) has a pivot joint (49b), and the pivot joint (49b) is provided within the receiving boss (412b) to connect the actuating member (412) and the second linking member (49);
wherein, optionally, the pivot joint (49a, 49b) is a spherical head.

9. The brake mechanism (4) according to claim 7, optionally in combination with claim 8, wherein the brake mechanism (4) further comprises a rear leg tube (47) provided on a frame (1) of the wheeled carrying apparatus (100), wherein the wheel mount (31) is rotatably sleeved onto the rear leg tube (47), and the receiving part (48a) is provided within the rear leg tube (47);
wherein, optionally, the brake mechanism (4) further comprises a first sleeve (414) and a second sleeve (415), wherein the first sleeve (414) is fixed within the rear leg tube (47), the second sleeve (415) is built into the rear leg tube (47) and rotatably connected to the first sleeve (414);
wherein the first sleeve (414) and the second sleeve (415) enclose an internal space through which the first linking member (48) and the second linking member (49) pass, and the receiving part (48a) is located within the internal space.

10. The brake mechanism (4) according to any of the preceding claims, wherein the brake mechanism (4) further comprises an elastic restoring member (46) providing an elastic force to restore the thrusting member (45), and/or
wherein a hub of the wheel is provided with clamping holes (32) distributed about a rolling axis of the wheel, the clamping hole (32) has an opening facing outwards, and the locking member (43) is capable of moving into the clamping hole (32) to lock the wheel or moving out of the clamping hole (32) to unlock the wheel.

11. The brake mechanism (4) according to any of the preceding claims, wherein the driving member (41) is in a form of a sleeve and is rotatably sleeved onto a crossbar of a frame (1) of the wheeled carrying apparatus (100), and the driving member (41) has a pedal (411) extending out therefrom for stepping on.

12. The brake mechanism (4) according to claim 11, wherein a locking assembly (410) is provided between the driving member (41) and the frame (1) to lock or unlock the driving member (41);
wherein, optionally, the locking assembly (410) comprises a locking pin (410b) provided on the driving member (41), and two locking recesses (410a) provided on the frame (1), wherein the locking pin (410b) cooperates with one of the locking recesses (410a) to position the driving member (41) when the driving member (41) is rotated to a position of locking the wheel; and the locking pin (410b) cooperates with the other of the locking recesses (410a) to position the driving member (41) when the driving member (41) is rotated to a position of unlocking the wheel;
wherein, further optionally, the locking pin (410b) is movably provided on the driving member (41), wherein the locking assembly (410) further comprises a compression spring (410c) provided between the locking pin (410b) and the driving member (41) to drive the locking pin (410b) to extend out; and/or
wherein, further optionally, the driving member (41) is further provided with a guiding groove (410d) at a side thereof, wherein the guiding groove (410d) is provided between the two locking recesses (410a), the locking pin (410b) slides along the guiding groove (410d) towards the other of the locking recess (410a) when the driving member (41) is rotated and the wheel is unlocked, and the locking pin (410b) slides along the guiding groove (410d) towards the one of the locking recesses (410a) when the driving member (41) is rotated and the wheel is locked.

13. A wheeled carrying apparatus (100) comprising a frame (1) and a pair of universally rotatable front wheels (2), wherein the wheeled carrying apparatus (100) further comprises a pair of rear wheels (3) and the brake mechanism (4) according to any one of claims 1 to 12, and the brake mechanism (4) is provided on the frame (1) and enable to simultaneously lock the pair of rear wheels (3) for prohibiting the rear wheels (3) from rolling.

14. The wheeled carrying apparatus (100) according to claim 13, wherein the wheeled carrying apparatus (100) further comprises an orientation mechanism (5), the rear wheel (3) is pivotally connected to the wheel mount (31), the wheel mount (31) is provided on the frame (1) in a universal rotation manner, the orientation mechanism (5) limits two wheel mounts (31) simultaneously to prohibit the wheel mounts (31) from universally rotating, or releases the two wheel mounts (31) simultaneously to allow the wheel mounts (31) to universally rotate; and
wherein, optionally, the orientation mechanism (5) comprises an operating part (51), a third linking member (52), a wheel mount latch (53) and a restoring spring (54), the operating part (51) is connected to one end of the third linking member (52), the other end of the third linking member (52) is connected to the wheel mount latch (53), the restoring spring (54) provides an elastic force for restoring the wheel mount latch (53), the wheel mount latch (53) is insertable into the wheel mount (31) and positions the rear wheel (3), or is disengaged from the wheel mount (31) and releases the rear wheel (3); and
wherein, further optionally, the operating part (51) is movably provided on the frame (1) of the wheeled carrying apparatus (100) and symmetrically provided with two inclined sliding slots (51a), a moving head (52a) is provided on an end of the third linking member (52), and the moving head (52a) is movably provided on the frame (1) and movably inserted in the inclined sliding slot (51a).

15. The wheeled carrying apparatus (100) according to claim 13 or 14, wherein a bearing (33) is provided between the frame (1) and the wheel mount (31); and optionally,
wherein the frame (1) has a rear leg tube (47), the wheel mount (31) has a pivoting sleeve (31a) pivotally connected with the rear leg tube (47), and the bearing (33) is provided between the pivoting sleeve (31a) and the rear leg tube (47); and further optionally
wherein a wall surface of the pivoting sleeve (31a) that is in contact with an outer wall of the bearing (33) has a toothed structure in a circumferential direction.
